(19) Europäisches Patentamt
European Patent Office
Office européen des brevets

(11) **EP 1 775 111 A2**

(12) **EUROPEAN PATENT APPLICATION**

(43) Date of publication:
**18.04.2007 Bulletin 2007/16**

(51) Int Cl.:
***B29D 30/30*** (2006.01)  ***B29D 30/28*** (2006.01)

(21) Application number: **06121930.9**

(22) Date of filing: **06.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.10.2005 US 248670**

(71) Applicant: **THE GOODYEAR TIRE & RUBBER COMPANY**
**Akron,**
**Ohio 44316-0001 (US)**

(72) Inventors:
• **Phippen, Steven John**
**Napanee**
**Ontario**
**K7R 2H4 (CA)**
• **Dejacimo, David Michael**
**Louisville, OH 44641 (US)**
• **Rust, Paul Edward**
**Lawton, OK 73507 (US)**

(74) Representative: **Kutsch, Bernd**
**Goodyear S.A.,**
**Patent Department,**
**Avenue Gordon Smith**
**7750 Colmar-Berg (LU)**

(54) **Pivoting splice stitcher and method of stitching an angled splice**

(57)    The invention provides a stitcher (10) and a method of stitching an angled or helical splice on a material mounted on a drum, the method comprising the steps of: rotating the drum at a constant speed (U), traversing a stitcher assembly at a constant velocity (V), wherein the stitcher assembly velocity is coordinated with the drum speed so that the stitcher engages the material along the angled or helical splice. The invention further provides a stitcher (10) having a roller (41) rotatably mounted to a support frame (20) having a longitudinal axis, wherein the roller is pivotally mounted to the support frame so that the roller can pivot about the longitudinal axis.

FIG-3

EP 1 775 111 A2

## Description

Field of the Invention

The invention relates to a stitcher suitable for tire manufacturing, and more particularly to a stitcher for stitching in an axial direction or in a helical path, and to a method of stitching an angled splice.

Background of the Invention

In the art of tire building, stitching is an essential operation directed to the purpose of eliminating air and other gasses trapped between the tire components on a green carcass. Stitchers typically comprise a wheel or roller rotatably mounted on an axle that applies pressure to the tire components mounted on a tire building drum. The stitcher typically rolls against the component in a direction approximately perpendicular to the longitudinal axis of the tire building drum. As the stitcher rolls against the component, the pressure forces the trapped air out from between the tire components as well as to increase the adherence of the components.

One disadvantage to prior art stitchers is that they are generally not capable of stitching along an angled splice. Typically angled splices are stitched manually.

Summary of the Invention

The invention provides in a first aspect a method of stitching an angled or helical splice according to claim 1.

The invention further provides a stitcher according to claim 6.

Dependent claims cover preferred embodiments of the invention.

Definitions

For ease of understanding this disclosure, the following items are disclosed:

"Axial" and "axially" means the lines or directions that are parallel to the axis of rotation of the tire.
"Circumferential" means lines or directions extending along the perimeter of the surface of the annular tread perpendicular to the axial direction.
"Radial" and "radially" mean directions radially toward or away from the axis of rotation of the tire.
"Ply" means a preferably continuous layer of rubber-coated parallel cords.

Brief Description of the Drawings

The invention will be described by way of example and with reference to the accompanying drawings in which:

Figure 1 is a perspective view of a stitcher of the present invention;
Figure 2 is a side view of the stitcher of Figure 1;
Figure 3 is a front perspective view of the stitcher shown in use on a tire building drum;
Figure 4 is a view of the stitcher control system.

Detailed Description of the Invention

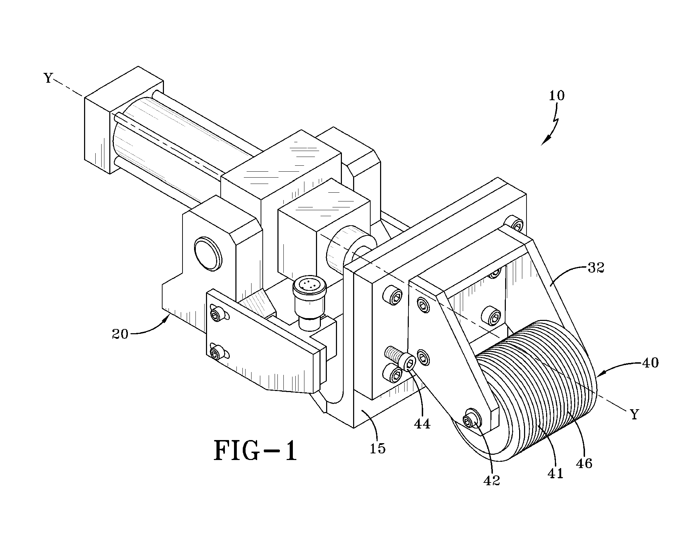

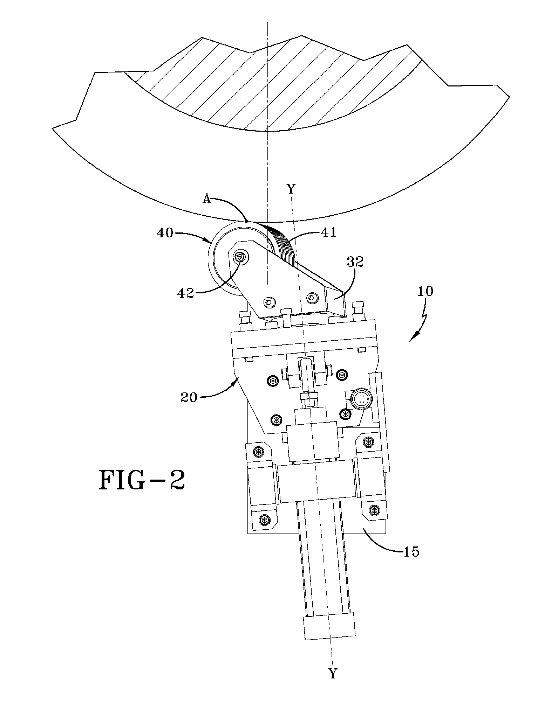

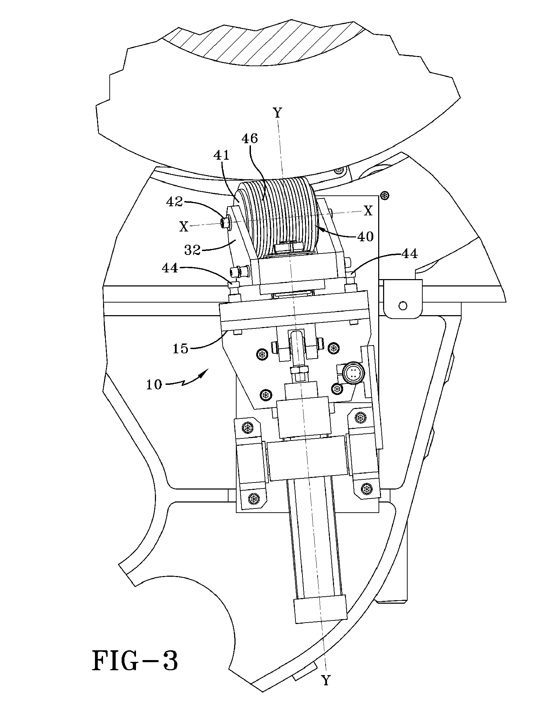

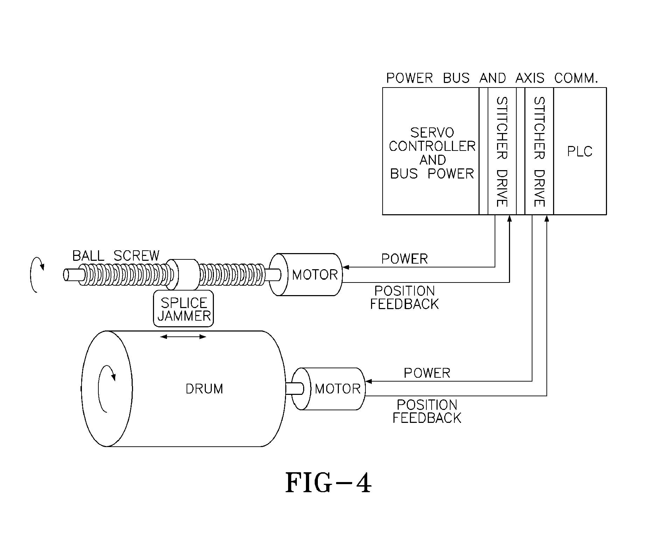

With reference to Figures 1 through 4, a cross-sectional view of the stitcher of the present invention is illustrated. As shown in Figure 1, a pivotable stitcher mechanism 10 is provided. The stitcher mechanism 10 includes a mounting bracket 15 connected to a support frame 20. The stitcher mechanism includes a support rail which is slidably mounted within the support frame 20 to allow translation of the stitcher mechanism along the support rail's longitudinal axis Y-Y. The mounting bracket 15 of the stitcher mechanism may be mounted upon a carriage mechanism or to an axis of a linear servo mechanism such as a ball screw as shown in Figure 4 for translating along the outer circumference of a tire building drum, parallel to the drum's longitudinal axis.

The stitcher mechanism 10 is further provided with a pivotable head 32 having a roller assembly 40 mounted thereto. The head 32 is rotatably mounted to the support frame 20 so that the head and roller assembly 40 can rotate or swivel about the Y axis of the stitcher mechanism. One or more pivot limiters 44 may be provided on the support frame 20 to limit the rotational movement of the pivotable head 32. It is preferred that the pivotable head be capable of pivoting +/- 90 degrees, more typically in the range of +/-12 degrees for stitching ply. Allowing the pivot angle to vary results in the roller following the desired helical angle of the ply. This is due to the way the roller assembly is designed. As shown in Figure 5, the force point of contact A with the ply is offset from the longitudinal axis Y-Y of the stitcher assembly. Because the point of force contact with contact surface of the ply is offset from the pivot axis of the stitcher assembly, the stitcher roller cannot scuff the area of the splice. This is because the torque force generated by the tire building drum causes the stitcher assembly to pivot away from the drum assembly.

The roller assembly 40 further comprises a roller 41 rotatably mounted upon a first end of the mechanism via an axle 42. The roller 41 rotates about its longitudinal axis X-X. The outer surface of the roller 46 may comprise a rubber or elastomeric material.

The stitcher assembly is extended to the tire building drum surface once it is in position over the tire building section of the drum. In the initial start up position, the stitcher roller axis X - X is about perpendicular to the longitudinal axis of the tire building drum. In order for the stitcher mechanism to stitch a helical path following the splice, the speed of the drum must be coordinated with the speed of the stitcher. First the stitcher speed V is set to a desired speed. Next, the tire building drum speed U (radians/s) is determined from the following equation 1:

$$U = [V \, Tan(90-\phi)]/\{D\pi\}$$

where: U is the drum speed in radians/second
V is the stitcher speed, in inches/second
$\phi$ is the splice angle
D is the diameter of the drum in inches

The drum speed and the carriage speed of the stitcher may be geared together mechanically or be electrically controlled via a servo controller to maintain the velocity ratio defined by equation 1. The drum is rotated at the drum speed U starting from a specific location. The stitcher is also started from an initial location at the end of the drum, where the roller axis X - X is perpendicular to the drum longitudinal axis Y - Y. The stitcher is traversed across the drum at a velocity V while the drum rotates at speed U. Because of the coordination of the drum and stitcher speeds, the stitcher roller traverses the helix of the splice at the splice angle $\phi$ (or the ply angle).

One of the unique advantages of the stitcher of the present invention is that the stitcher has a pivot between the roller and the traversing section, with the force area between the roller and the material trailing the pivot point of the assembly, allowing the stitcher to follow the helical path without any lateral force on the material to be stitched.

**Claims**

1. A method of stitching an angled or helical splice on a material mounted on a drum, the method comprising the steps of:

   rotating the drum at a constant speed (U), traversing a stitcher assembly (10) at a constant velocity (V), wherein the stitcher assembly velocity is coordinated with the drum speed (U) so that the stitcher assembly (10) engages the material along the angled or helical splice.

2. The method of claim 1 wherein the drum speed (U) is:

$$U = [Vtan(90-\phi)]/D\pi$$

   where V is the stitcher speed, $\phi$ is the splice angle of the angled or helical splice and D is the diameter of the drum.

3. The method of claim 1 or 2, wherein the drum is a tire building drum and wherein the material is a tire component.

4. The method of at least one of the previous claims, wherein the material is a ply comprising cords embedded in rubber.

5. The method of claim 1 or 2, wherein the splice angle is the ply angle.

6. A stitcher comprising a roller (41) rotatably mounted to a support frame (20) having a longitudinal axis, wherein the roller (41) is pivotally mounted to the support frame (20) so that the roller can pivot about the longitudinal axis.

7. The stitcher of claim 6, wherein the pivot point is not in alignment with the longitudinal axis.

FIG—1

FIG-2

FIG-3

FIG-4